# EUROPEAN PATENT APPLICATION

(11) **EP 4 826 284 A1**
(43) Date of publication of application: **21.10.2026**
(21) Application number: 25227596.1
(22) Date of filing: 30.12.2025
(51) Int. Cl.: F16L 21/03, F16L 37/091

(54) **PRESS FITTING COMPRISING AN IMPROVED SPACER**

(30) Priority: 15.04.2025 IT 202500008439
(71) Applicant: Rubinetterie Bresciane Bonomi S.p.A., 25064 Gussago (BS) (IT)
(72) Inventor: BONOMI, Aldo, 25064 GUSSAGO (BS) (IT)
(74) Representative: Studio Torta S.p.A.

(57) **Abstract**

A press fitting (1) is described that is configured for joining at least two tubular ducts together, the fitting (1) comprises a hollow tubular body (2) acting as an external casing, extending along a central axis (X) and having, at its free ends (3), at least two axial end openings (4), the tubular body (2) defining at least one annular compression portion (6) arranged at said end opening (4) and internally delimiting an annular chamber (7) extending around the central axis (X); a gripping member (10), a sealing member (11) and a spacer member (12) housed inside the annular chamber (7) and extending, at least in part, in a circumferential direction around the central axis (X); the spacer member (12) is axially interposed between the sealing member (11) and the gripping member (10) and has at least one groove (16) extending circumferentially around the central axis (X) without interruption or in a segmented manner.

## Description

### CROSS-REFERENCE TO RELATED APPLICATIONS

This patent application claims priority from Italian patent application no. 102025000008439 filed on April 15, 2025, the entire disclosure of which is incorporated herein by reference.

### TECHNICAL SECTOR

This invention relates to a press fitting for pipes, in particular a press fitting for joining at least two ducts or pipes together.

### STATE OF THE ART

Press-type fittings configured to join at least two tubular ducts together are known.

Specifically, these fittings are configured to fluidically connect, relatively quickly, two pipes designed to transport a fluid.

In some cases, the transported fluid may be a liquid, for example water, industrial oils, coolants, etc.

In other cases, the fluid transported may be a pressurised gas, for example carbon dioxide.

Typically, a press fitting of the above-mentioned type comprises a tubular body acting as an external casing and extending longitudinally along a central axis.

Generally, the tubular body has an essentially cylindrical shape.

At its opposite free ends, the tubular body has at least two axial openings at opposite ends configured to enable the insertion of respective end portions of the ducts or pipes to be connected together.

The central axis of the tubular body is usually straight.

However, in some cases, and depending on the position in space of the end portions of the pipes to be connected, the central axis may be curved: for example, the tubular body may be shaped in such a way that the at least two end openings are arranged at 90° to each other, or at an angle other than 180° (if the axis is straight).

In some designs, the tubular body may comprise more than two openings, for example three end openings (usually arranged in a T or Y shape to constitute a splitter).

Whatever shape the tubular body has, it also comprises at least two compression portions, arranged at the respective free ends (and thus openings).

Each compression portion usually has an outer diameter greater than the outer diameter of the rest of the tubular body and internally constitutes an annular chamber extending around the central axis.

In addition, the tubular body defines an axial abutment for each of the end portions of the respective pipe to be inserted through the respective opening.

This axial abutment is formed by means of a shoulder defined in the tubular body (for example, by means of a variable or reduced-diameter cross section) and arranged at a predetermined axial distance from the corresponding compression portion.

In view of the above, if the central axis is straight and the tubular body has two end openings, it is possible to identify two symmetrical and opposite halves of the fitting, each having a compression portion and a shoulder, and each capable of accommodating the end portion of a corresponding pipe to be joined.

The annular chamber coaxially houses at least one gripping member and one sealing member.

The annular chamber has an appropriate retention edge to axially hold the gripping member and the sealing member inside.

The gripping member is typically defined by a gripping ring made of metal extending around the central axis and including an annular base body having an outer surface arranged in contact with the inner annular surface of the annular chamber and an inner surface facing the central axis.

The base body can form a closed ring or include two free ends so that it has a C shape.

The gripping member also comprises multiple gripping elements, usually in the form of teeth or otherwise defining multiple cutting profiles, extending from the inner surface of the base body in a radial direction towards the central axis.

The sealing member is defined by a sealing ring made of elastomeric material, usually an O-ring.

The sealing member is designed to establish a fluid-tight seal to prevent fluid from escaping from the tubular body of the fitting.

In order to connect the fitting and the pipes, once the pipes to be connected have been axially inserted through the corresponding openings and until they are axially abutted against the corresponding shoulders, each compression portion is compressed radially, using a special tool, towards the central axis and thus towards the outer surface of the pipe inserted therein.

The compression results in the radial displacement of the gripping member and the sealing member towards the central axis, and thus a radial crushing of these, which are compressed against the outer surface of the respective pipe.

The gripping elements of the gripping member, suitably made of a harder material than that of the pipe, penetrate the outer surface of the pipe, mechanically coupling the pipe.

The sealing member, being made of elastomeric material, is also pressed against the outer surface of the corresponding pipe, thus defining a fluid-tight annular barrier in that area.

Thus, by compression of the at least two compression portions, the two pipes to be joined are cold mechanically coupled (by means of the gripping members) and fluidically coupled (by means of the sealing members). The fitting is thus achieved.

According to some design solutions, the annular chamber also houses a spacer member arranged axially between the gripping member and the sealing member.

The spacer member is typically defined by a separating ring made of metal, for example a washer. The separating ring is arranged coaxially within the annular chamber and prevents the sealing member from being damaged by the teeth of the corresponding gripping member during compression due to a non-nominal displacement of the teeth.

From the above, it is clear that the compression portion and all the various components housed within it must have an optimal plastic compression behaviour that ensures the correct radial displacement and, above all, the correct mechanical and fluidic coupling of the pipe.

To this end, the Applicant has noted that the press fittings of the type known and described above were susceptible to further improvement.

### OBJECT AND SUMMARY OF THE INVENTION

The purpose of this invention is to produce a press fitting that is highly reliable and inexpensive, and makes it possible to meet the need specified above and connected to known press fittings.

According to the invention, this purpose is achieved with a press fitting as claimed in claim 1.

### BRIEF DESCRIPTION OF THE DRAWINGS

For a better understanding of this invention, a preferred, non-limiting embodiment thereof will be described below purely by way of example and with the aid of the accompanying drawings, wherein:
- Figure 1 is a schematic view in axial cross section, with parts removed for clarity, of part of a press fitting according to this invention and an end portion of a pipe to be connected by means of the press fitting;
- Figure 2 is a cross-section view on an enlarged scale of the compression zone of the press fitting in Figure 1;
- Figures 3 to 12 are cross-section views, on an enlarged scale, of a component of the press fitting in Figure 1.

### DETAILED DESCRIPTION

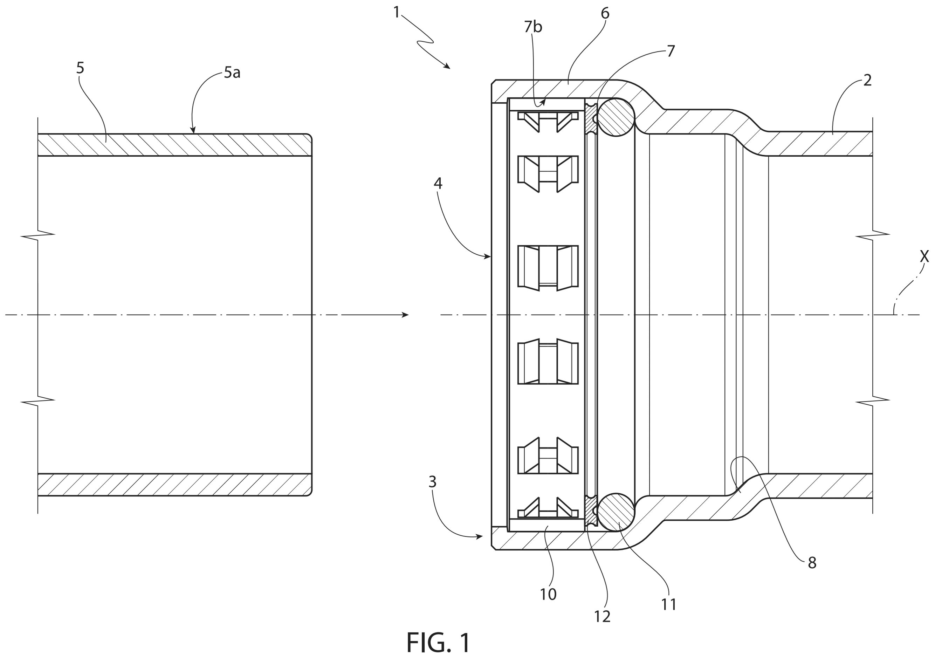

With reference to Figure 1, a press fitting configured to join at least two tubular ducts to each other is denoted, as a whole, with reference no. 1.

Specifically, the fitting 1 is configured to make the fluidic connection between the at least two tubular ducts, or pipes, and thus allow fluid to flow from one pipe to the other without leaking.

The fitting 1 is thus configured to create both a mechanical coupling and a fluidic coupling between the two pipes.

The fitting 1 comprises a tubular body 2 acting as an external casing and extending longitudinally along a central axis X.

The tubular body 2 preferably has an essentially cylindrical shape.

At its opposite free ends 3, the tubular body 2 has at least two axial openings 4 at opposite ends configured to enable the insertion of respective end portions 5 of the ducts or pipes to be connected together.

Figure 1 schematically depicts this configuration.

Specifically, Figure 1 shows only one of the at least two free ends 3, only one opening 4 and only one end portion 5 of a respective pipe to be connected.

According to the preferred, non-limiting embodiment described and illustrated here, the fitting 1 is configured to join two pipes together.

Consequently, the tubular body 2 has two openings 4 and two free ends 3.

In other embodiments not illustrated, the fitting 1 could be configured to join three or more pipes together. In this case, the tubular body 2 has at least three free ends 3 and at least three openings 4. Naturally, the central axis has at least one bifurcation. For example, the tubular body 2 takes on a T or Y shape.

According to the preferred, non-limiting embodiment described and illustrated here, the central axis X is straight.

Alternatively, according to an embodiment not illustrated, the central axis X could be curved. For example, the tubular body 2 may have a shape such that the at least two openings 4 are arranged at 90° to each other or, in any case, at an angle other than 180° (if the axis is straight).

The tubular body 2 comprises, or defines, two compression portions 6, each arranged at a respective free end 3 and, thus, at a respective opening 4.

In an alternative embodiment, the tubular body 2 and, thus, the fitting 1, may comprise a single compression portion 6, while the other free ends 3 of the tubular body 2 include, in place of the respective compression portion 6, a threaded portion or otherwise another type of coupling portion different to the compression portion, configured to allow hooking or coupling with the corresponding end portion 5.

For example, in one embodiment, the fitting 1 may comprise a compression portion 6 arranged at a first opening 4 and, thus, a first free end 3, and a threaded portion arranged at a second opening 4 and, thus, a second free end 3. In this case, the fitting 1 therefore comprises only one press connection point.

In what follows, reference will be made to a single free end 3, a single opening 4, and a single compression portion 6. However, the structural and functional characteristics described here apply equally to each free end 3, opening 4, and compression portion 6 of the tubular body 2.

The compression portion 6 internally delimits an annular chamber 7 extending around the central axis X.

In particular, the compression portion 6 is defined by a raised annular portion of the tubular body 2, which constitutes the annular chamber 7.

More specifically, the compression portion 6 has an outer diameter greater than the outer diameter of the rest of the tubular body 2.

The tubular body 2 defines a shoulder 8 for each of the end portions 5 of the corresponding pipe to be inserted through the respective opening 4.

As illustrated in Figure 1, this shoulder 8 defines an axial abutment designed to receive the corresponding end portion 5 axially abutting against it, thus constituting an end stop for the respective pipe.

The shoulder 8 is arranged at a certain axial distance from the compression portion 6, so as to enable the insertion of the end portion 5 for a desired length sufficient to constitute a nominal and appropriate fitting.

In light of the above, it is possible to identify two symmetrical and opposite halves of the fitting 1 (only one shown in Figure 1), each having a compression portion 6 and a shoulder 8, and each designed to accommodate the end portion 5 of a corresponding pipe to be joined.

In order to establish the connection between the two pipes, the fitting 1 also comprises, for each compression portion 6: a gripping member 10, a sealing member 11 and a spacer member 12 housed within the annular chamber 7 and extending, at least in part, in a circumferential direction about the axis X.

Specifically, the annular chamber 7 defines an annular pocket that houses the gripping member 10, the sealing member 11, and the spacer member 12.

The annular chamber 7 has an appropriate retention edge 7a to axially hold the gripping member 10, the sealing member 11, and the spacer member 12 inside.

The gripping member 10 is preferably defined by a gripping ring made of metal extending around the central axis X and including an annular base body 14 having an outer surface 14a arranged in contact with the inner annular surface 7b of the annular chamber 7 and an inner surface 14b facing the central axis X.

The base body 14 can form a closed ring or include two free ends so that it has a C shape.

The gripping member 10 also comprises multiple gripping elements 15, usually in the form of teeth or otherwise defining multiple cutting profiles, extending from the inner surface 14b of the base body 14 in a radial direction towards the central axis X.

The sealing member 11 is defined by a sealing ring made of elastomeric material, preferably an O-ring.

The sealing member 11 is designed to establish a fluid-tight seal to prevent fluid from escaping from the tubular body 2.

In order to determine the connection between the fitting 1 and the pipes, once the end portions 5 of the pipes to be connected have been axially inserted through the corresponding openings 4 and until they are axially abutted against the corresponding shoulders 8, each compression portion 6 is compressed radially, using a special tool, towards the central axis X and thus towards the outer surface 5a of the corresponding end portion 5 inserted therein.

The compression results in the radial displacement of the gripping member 10 and the sealing member 11 towards the central axis X, and thus a radial crushing of these, which are compressed against the outer surface 5a.

The gripping elements 15 of the gripping member 10, suitably made of a harder material than that of the end portion 5a, penetrate the outer surface 5a, mechanically coupling the pipe.

The sealing member 11, being made of elastomeric material, is also pressed against the outer surface 5a, thus defining a fluid-tight annular barrier in that area.

Therefore, in view of the foregoing, each compression portion 6 is designed to be pressed radially towards the central axis X, so that the gripping member 10 cooperates with the outer surface 5a of the corresponding tubular duct to be joined defining a mechanical coupling, and so that the sealing member 11 cooperates with said outer surface 5a to establish a fluid-tight barrier.

The fitting is thus achieved.

With respect to the central axis X, it is possible to identify or define an axial direction, parallel to the central X axis, and a radial direction, perpendicular to the central axis X.

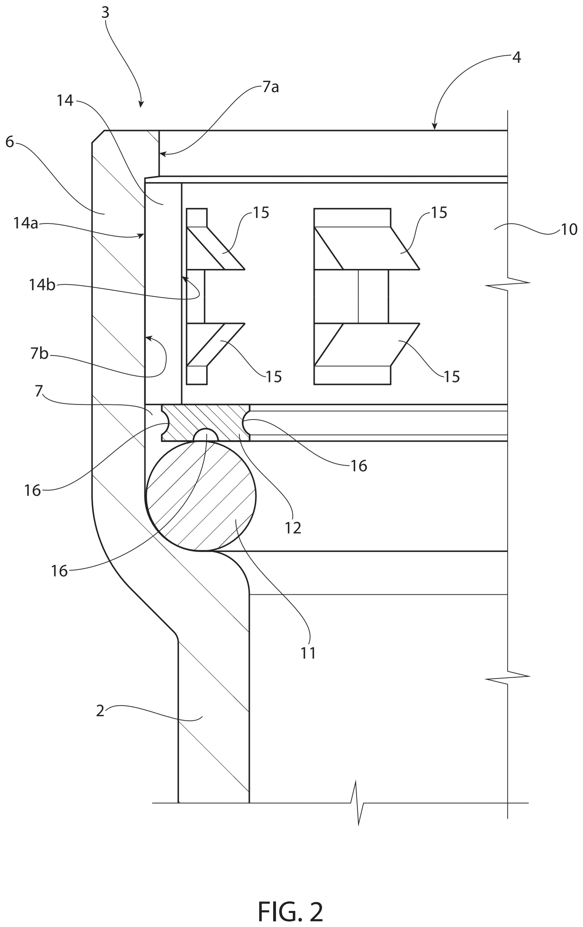

As is clearer in Figure 2, the spacer member 12 is interposed axially, that is along the axial direction, between the sealing member 11 and the gripping member 10.

The spacer member 12 is preferably defined by a separating ring made of metal, for example a washer; this ring extends circumferentially around the axis X.

In one embodiment, the spacer member 12 extends entirely, without interruptions, and thus annularly, around the axis X.

In an alternative embodiment, the spacer member 12 extends around the axis X with interruption, thus including two free ends and having, essentially, a C shape.

The spacer member 12 allows an (axial) distance to be maintained between the sealing member 11 and the gripping member 10; this distance is also maintained during compression. Thus, the sealing member 11 is prevented from being damaged by the teeth 15 of the corresponding gripping member 10 during compression due to a non-nominal displacement of the teeth.

During radial compression, the spacer member 12 is also compressed towards the central axis X.

According to an important aspect of this invention, the spacer member 12 has at least one groove 16 extending around the central axis X (Figure 2).

In a preferred embodiment, the at least one groove 16 extends uninterruptedly, and thus annularly, around the axis X, along the circumferential direction.

In another embodiment, the at least one groove 16 extends in a segmented manner, thus with at least one, and preferably several, interruptions, along the circumferential direction. For example, the groove 16 could consist of multiple circumferential arcs constituting grooved tracts on the spacer member 12, angularly distributed around the axis X.

In one embodiment, the at least one groove 16 includes at least one axial groove 17, 18 extending axially within the spacer member 12 (Figures 2, 3, 6, 7, 10, 11, 12).

More precisely, this axial groove 17, 18 extends within the body of the spacer member 12 in an axial direction, that is, parallel to the central axis X.

In practice, the at least one axial groove 17, 18 defines a penetrating groove in the body or material of the spacer member 12 in the axial direction.

The Applicant has observed that the presence of at least one axial groove 17, 18 decreases the stiffness, and thus increases and promotes pliability, at the radial compression (that is, towards the axis X) of the spacer member 12.

This facilitates radial deformation of the spacer member 12 during compression.

In one embodiment, the at least one groove 16 includes a radial groove 20, 21 that extends radially with respect to the central axis X, inside the spacer member 12.

More precisely, this radial groove 20, 21 extends within the body of the spacer member 12 in a radial direction, that is, perpendicularly to the central axis X.

In practice, the at least one radial groove 20, 21 constitutes a penetrating groove in the body or material of the spacer member 12 in the axial direction.

The Applicant has noted that the presence of at least one radial groove 20, 21 allows for at least two points of contact (with the outer surface 5a of the end portion 5 or with the inner surface 7b of the annular chamber 7), that is, with the pipe to be connected or with the tubular body. This results in a better sealing of the fitting 1, as the contact pressure increases with the same radial compression force exerted. This is especially applicable under high temperature operating conditions, as the material of the spacer member 12 can weld better to the pipe or to the tubular body 2.

Furthermore, the presence of the at least one radial groove 20, 21 contributes to the increased pliability to radial (that is, towards the axis X) compression of the spacer member 12.

Some preferred embodiments of the spacer member 12 according to this invention will be described below.

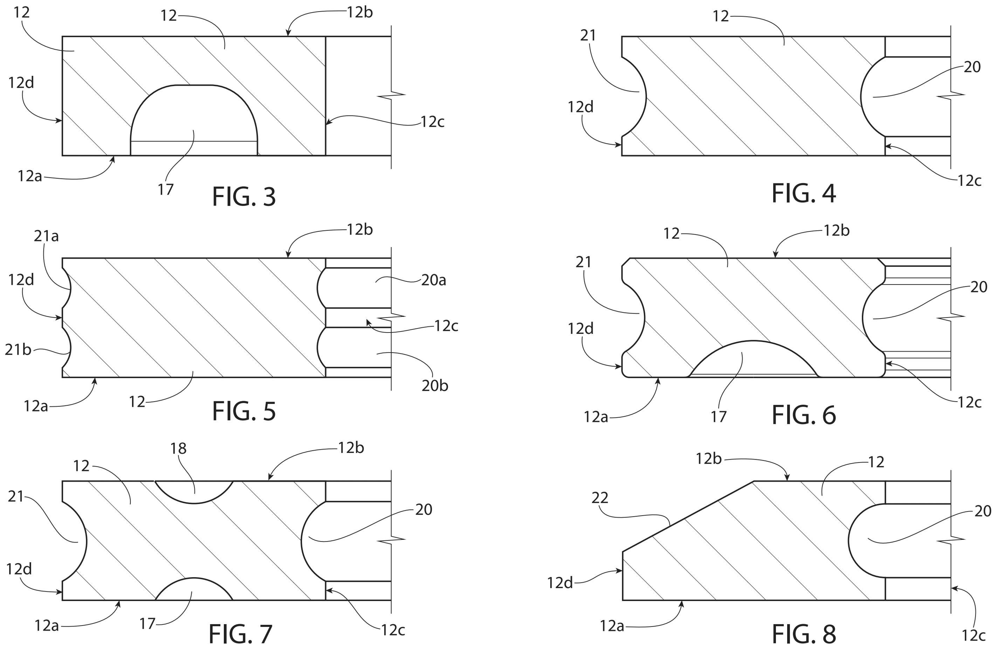

Referring to Figure 3, in a first embodiment the spacer member 12 comprises an axial groove 17 arranged at a first axial wall 12a of the spacer member 12 facing the sealing member 11.

Alternatively, the spacer member 12 comprises an axial groove 18 arranged at a second axial wall 12b of the spacer member 12 facing the gripping member 10.

With reference to Figure 7, in one embodiment, the spacer member 12 has two axial grooves 17 and 18, a first of which (axial groove 17) is arranged at the first axial wall 12a and a second of which (axial groove 18) is arranged at the second axial wall 12b.

The presence of axial grooves 17, 18 on both the first axial wall 12a and second axial wall 12b further increases the pliability of the spacer member 12 to radial compression, a feature desired in certain applications (that is, for certain fitting sizes or for certain materials).

Regarding the above-mentioned at least one radial groove 20, 21, in one embodiment the spacer member 12 comprises a radial groove 20 arranged at a radially inner wall 12c of the spacer member 12 facing the central axis X.

Alternatively, the spacer member 12 comprises a radial groove 21 arranged at a radially external wall 12d of the spacer member 12 facing the internal surface 7b.

With reference to Figure 4, in one embodiment, the spacer member 12 has two radial grooves 20 and 21, a first of which (radial groove 20) is arranged at the radially internal wall 12c and a second of which (radial groove 21) is arranged at the radially external wall 12d.

The presence of radial grooves 20, 21 on both the inner and outer radial walls 12c, 12d improves the overall seal of the fitting 1, due to the presence of two contact points for each radial wall 12c, 12d, which have a smaller area than a "whole" radial wall 12c, 12d, that is, without grooves, a feature desired in certain applications (that is, for certain fitting sizes or for certain materials).

It should be specified here that the above-mentioned axial walls 12a, 12b and radial walls 12c, 12d are annular around the central axis X.

Specifically, the axial walls 12a, 12b are perpendicular to the central axis X, while the radial walls 12c, 12d are parallel to the central axis X.

Referring to Figure 5, in one embodiment the spacer member 12 includes at least two said radial grooves 20a, 20b, 21a, 21b arranged at the radially inner wall 12c and/or the radially outer wall 12d.

Figure 5 shows the case where each radial wall 12c, 12d has two radial grooves.

At least two radial grooves 20a, 20b and 21a, 21b on each radial wall are axially spaced apart.

In this way, three contact points (with the corresponding pipe or tubular body 2) are defined at each of the radial walls 12c, 12d, thus resulting in an even better seal. In certain applications (defined by the size and/or material of the fitting or pipes, or the temperature of the operating fluid), the three contact points favour sealing with the pipe or tubular body 2.

Advantageously, with reference to Figures 6, 7, and 10, the spacer member 12 comprises at least one above-mentioned axial groove 17, 18 and at least one said radial groove 20, 21.

Thus, the advantages of increased pliability to radial compression and improved sealing due to multiple contact points are combined.

More precisely, in the embodiment illustrated in Figure 6, the spacer member 12 has a cross section defining an essentially rectangular profile, with the two opposite axial walls 12a, 12b and the two opposite radial walls 12c, 12d defining, in cross section, the sides of the rectangular profile.

The spacer member 12 according to this embodiment 12 includes:
- an axial groove 17 positioned at the first axial wall 12a;
- a first radial groove 20 positioned at the radially inner wall 12c; and
- a second radial groove 21 positioned at the radially external wall 21.

The Applicant has noted that this shape of the spacer member 12 (illustrated in Figure 6 and Figures 1 and 2) represents the structural configuration that allows for the optimal compromise between appropriate pliability to radial compression, robustness of seal due to the contact points and the construction complexity of the spacer member 12.

Each groove 16 preferably has a semicircular shape.

Specifically, each groove 16 has a cross section having a semicircular profile.

Alternatively, the profile could be semi-elliptical, semi-oval or otherwise semi-polygonal.

With reference to Figure 7, in one embodiment, the spacer member 12 also includes a second axial groove 18 arranged at the second axial wall 12b.

In this case, the pliability to compression is further increased. This is preferable in certain applications of the fitting 1.

With reference to Figures 8, 9, 10, 11 and 12, at least one of the above-mentioned radially internal wall 12c and radially external wall 12d has an inclined portion 22 inclined with respect to the axial direction and the radial direction.

Specifically, the inclined portion 22 defines a variable cross section or diameter of the at least one of either said radially internal wall 12c or radially external wall 12d.

More specifically, at least one of either said radially internal wall 12c or radially external wall 12d has no groove 16, that is, no radial groove 20, 21.

More specifically, the other of said radially internal wall 12c or radially external wall 12d is provided with the radial groove 20, 21.

For example, in the embodiment shown in Figure 8, the spacer member 12 comprises a radial groove 20 at the radially internal wall 12c, while the radially external wall 12d comprises an inclined portion 22.

Furthermore, this spacer member 12 does not comprise any axial groove 17, 18 at the axial walls 12a, 12b.

Alternatively, the radially external wall 12d could comprise the radial groove 21 and the radially internal wall 12c could comprise the inclined portion 22.

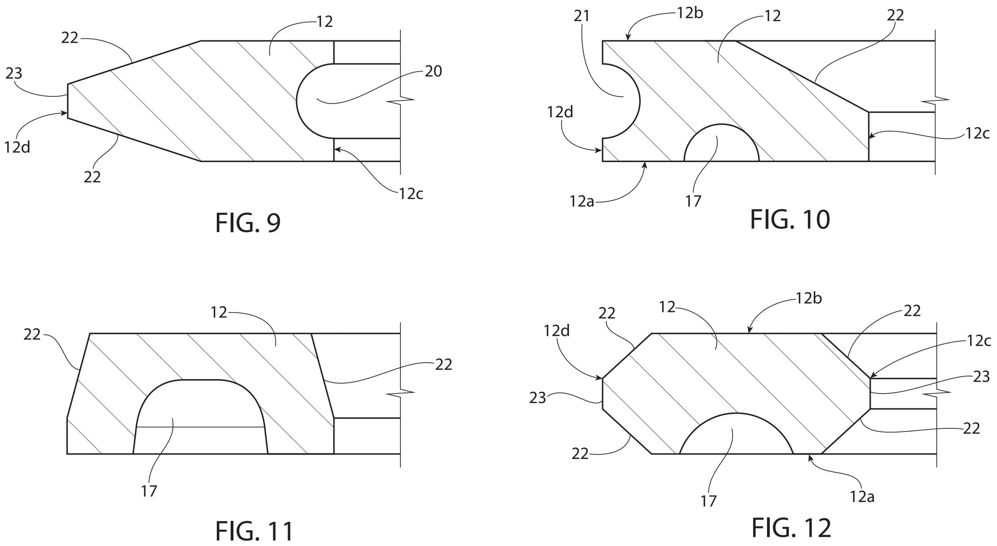

In the embodiment illustrated in Figure 10, the spacer member 12 comprises a radial groove 21 at the radially external wall 12d, an axial groove 17 at the axial wall 12a, while the radially internal wall 12c comprises an inclined portion 22.

Alternatively, the radially internal wall 12c could comprise the radial groove 21 and the radially external wall 12d could comprise the inclined portion 22.

In the embodiment illustrated in Figure 11, the spacer member 12 comprises a single axial groove 17 at the axial wall 12a, while both the radial walls 12c, 12d are provided with a respective inclined portion 22.

The Applicant has observed that the presence of an inclined portion 22 in place of the respective radial groove 20, 21 increases the rigidity of the spacer member 12 at the respective radial wall 12c, 12d, while retaining a reduced abutment surface (that is, contact interface) against the respective pipe or tubular body 2, compared to a radial wall 12c, 12d which is "whole", that is, without the inclined portion 22 and entirely parallel to the axis X. This results, in certain applications, in a better penetration of the material of the spacer member 12 into the material of the respective pipe or tubular body 2 and, therefore, in a better seal.

Advantageously, said at least one of either said radially internal wall 12c or radially external wall 12d has two inclined portions 22 and one parallel portion 23 parallel to the central axis X.

In particular, the two inclined portions 22 have opposite inclinations and are arranged symmetrically, with respect to the radial direction, on opposite sides of the parallel portion 23 parallel to the central axis X.

For example, in the embodiment shown in Figure 9, the radial wall 12c has a radial groove 20 and the radial wall 12d has two inclined portions 22 and a parallel portion 23 interposed between the latter. The inclined portions 22 are arranged symmetrically.

Alternatively, the radial wall 12c could comprise the two inclined portions 22 and the parallel portion 23 and the radial wall 12d could comprise the radial groove 21.

In the embodiment illustrated in Figure 12, both the radial walls 12c, 12d have such a symmetrical shape with two inclined portions 22 interposed by a parallel portion 23, and the axial wall 12a comprises an axial groove 17.

The Applicant has observed that the presence of two symmetrical inclined portions 22 improves the behaviour of the spacer member 12 at high temperatures, as the thermal expansion of the spacer member 12 is more predictable. In addition, the penetration of the material of the spacer member 12 into the material of the corresponding pipe or tubular body 2, and thus the sealing, is improved, as the contact interface is further reduced compared to the case where the radial wall is whole.

The advantages enabled by the press fitting 1 manufactured according to this invention will be apparent from an examination of the features thereof.

In particular, the presence of one or more grooves 16, 17, 18, 20, 21 makes it possible to increase the pliability to radial compression of the spacer member 12 and/or to improve the seal of the spacer member 12 against the corresponding pipe to be connected and/or against the tubular body 2.

Thus, the spacer member 12 assists the sealing member 11 in the fluid sealing of the fitting 1 and the gripping member 10 in the mechanical coupling with the pipe and does not hinder the correct deformation of the compression portion 6 as a result of radial compression.

Therefore, the compression and in-use performance of the fitting 1 is significantly improved.

It is clear that modifications can be made to the fitting 1 described and illustrated herein, and variations produced thereto, without thereby departing from the scope of protection defined by the claims.

## Claims

1. A press fitting (1) configured for joining at least two tubular ducts together, the fitting (1) comprising:
- a hollow tubular body (2) acting as an external casing for the fitting (1), extending along a central axis (X) and having, at its free ends (3), at least two axial end openings (4) configured, each, to allow the insertion of an end portion (5) of a respective tubular duct to be joined, the tubular body (2) defining at least one annular compression portion (6) arranged at said end opening (4) and internally delimiting an annular chamber (7) extending around the central axis (X);
- a gripping member (10), a sealing member (11) and a spacer member (12) housed inside the annular chamber (7) and extending, at least in part, in a circumferential direction around the central axis (X);
wherein the spacer member (12) is axially interposed between the sealing member (11) and the gripping member (10) and has at least one groove (16) extending circumferentially around the central axis (X) without interruption or in a segmented manner.

2. The press fitting as claimed in claim 1, wherein said at least one groove (16) includes an axial groove (17, 18) which extends axially within the spacer member (12).

3. The press fitting as claimed in claim 2, wherein:
- the axial groove (17) is arranged at a first axial wall (12a) of the spacer member (12) facing the sealing member (11); or
- the axial groove (18) is arranged at a second axial wall (12b) of the spacer member (12) facing the gripping member (10); or
- the spacer member (12) has two axial grooves (17, 18), a first one (17) of which is arranged at the first axial wall (12a) facing the sealing member (11) and a second one (18) of which is arranged at the second axial wall (12b) facing the gripping member (10).

4. The press fitting as claimed in claim 1 or 2, wherein said at least one groove (16) includes a radial groove (20, 21) which extends radially, with respect to the central axis (X), inside the spacer member (12).

5. The press fitting as claimed in claim 4, wherein:
- the radial groove (20) is arranged at a radially internal wall (12c) of the spacer member (12) facing the central axis (X); or
- the radial groove (21) is arranged at a radially external wall (12d) of the spacer member (12) facing an internal surface (7b) of the compression portion (6) radially delimiting the annular chamber (7); or
- the spacer member (12) has two radial grooves (20, 21), a first one (20) of which is arranged at the radially internal wall (12c) facing the central axis (X) and a second one (21) of which is arranged at the radially external wall (12d) facing the internal surface (7b) of the compression portion (6).

6. The press fitting as claimed in claim 4 or 5, wherein the spacer member (12) has a radially internal wall (12c) facing the central axis (X) and a radially external wall (12d) facing an internal surface (7b) of the compression portion (6) radially delimiting the annular chamber (7);
and wherein the spacer member (12) includes at least two said radial grooves (20a, 20b; 21a, 21b) arranged at the radially internal wall (12c) and/or the radially external wall (12d), the at least two radial grooves (20a, 20b; 21a, 21b) being axially spaced from one another.

7. The press fitting as claimed in claims 2 and 4, wherein the spacer member (12) comprises at least one said axial groove (17, 18) and at least one said radial groove (20, 21).

8. The press fitting as claimed in claim 7, wherein the spacer member (12) has a cross section defining a profile having two opposite axial walls (12a, 12b) and two opposite radial walls (12c, 12d) defining, in cross section, the sides of the profile, the spacer member (12) including:
- an axial groove (17) arranged at a first axial wall (12a) of the spacer member (12) facing the sealing member (11);
- a first radial groove (20) arranged at a radially internal wall (12c) of the spacer member (12) facing the central axis (X); and
- a second radial groove (21) arranged at a radially external wall (12d) of the spacer member (12) facing an internal surface (7b) of the compression portion (6) radially delimiting the annular chamber (7).

9. The press fitting as claimed in claim 8, wherein the spacer member (12) further includes a second axial groove (18) arranged at a second axial wall (12b) of the spacer member (12) facing the gripping member (10).

10. The press fitting as claimed in any of claims 1, 2, 4 or 7, wherein the spacer member (12) has a radially internal wall (12c) facing the central axis (X) and a radially external wall (12d) facing an internal surface (7b) of the compression portion (6) radially delimiting the annular chamber (7);
wherein at least one of said radially internal wall (12c) and radially external wall (12d) has an inclined portion (22) inclined with respect to the axial direction and the radial direction, relative to said central axis (X), said inclined portion (22) defining a portion with variable section or diameter of said at least one of said radially internal wall (12c) and radially external wall (12d), said at least one of said radially internal wall (12c) and radially external wall (12d) being devoid of any said groove (16).

11. The press fitting as claimed in claim 10, wherein said at least one of said radially internal wall (12c) and radially external wall (12d) has two said inclined portions (22) and a parallel portion (23) which is parallel to the central axis (X), the two inclined portions (22) having opposite inclinations and being arranged symmetrically, with respect to the radial direction, on opposite sides of the parallel portion (23).
